# EUROPEAN PATENT SPECIFICATION

(11) **EP 2 305 540 B1**
(45) Date of publication and mention of the grant of the patent: **02.11.2011**
(21) Application number: 10179206.7
(22) Date of filing: 24.09.2010
(51) Int. Cl.: B62D 25/10

(54) **Vehicular hood**
Fahrzeughaube
Capot véhiculaire

(30) Priority: 05.10.2009 JP 2009231886
(43) Date of publication of application: 06.04.2011
(73) Proprietor: Honda Motor Co., Ltd., Tokyo 107-8556 (JP)
(72) Inventor: Akasaka, Kosuke, Saitama 351-0193 (JP); Sato, Yosuke, Tochigi (JP)
(74) Representative: Trossin, Hans-Jürgen

(56) References cited:
- EP-A1- 1 980 473
- JP-A- 2006 321 314
- JP-A- 2007 223 433
- JP-A- 2010 030 501

## Description

The present invention relates to vehicular hoods for opening and closing a power unit housing that is provided in a front section of a vehicle for accommodating a power source like an engine, and more particularly to an improved inner hood panel (hood frame) for reinforcing a hood skin.

Document JP-A-2007-223 433 describes a vehicular hood according to the preamble of independent claim 1.

In recent years, development of measures for protecting an external object, such as a pedestrian, having collided against a traveling vehicle has been under way Such an external object will hereinafter be referred to as "external colliding object". Particularly, after a traveling vehicle has collided against an external colliding object (this collision is called "primary collision"), the colliding object may sometimes collide against a hood (bonnet) of the vehicle (this collision is called "secondary collision"). A technique employing a hood structure improved to effectively prepare for such a secondary collision is known from Japanese Patent Application Laid-Open Publication No. 2006-321314 (hereinafter referred to as "patent literature").

An inner hood panel of the hood structure disclosed in the patent literature has an outer frame section provided along the outer edge of the inner hood panel, and a plurality of inner frame sections and a plurality of through-holes located inwardly of the outer frame section. The plurality of inner frame sections are reinforcing sections arranged on the inner hood panel in a width direction of the vehicle and elongated generally in a front-rear direction of the inner hood panel. The plurality of through-holes is located generally centrally in the inner hood panel and between the inner frame sections and between the outer frame section and the inner frame sections.

Further, in the hood structure disclosed in the patent literature, each of the through-holes is surrounded at its opposite left and right sides with the inner frame sections so that rigidity at portions adjacent to the through-holes can be secured, as a result of which the entire hood can secure a considerable rigidity However, like the other conventionally-known hoods, the hood disclosed in the patent literature is required to perform another function of sufficiently protecting an external colliding object, such as a pedestrian, from a secondary collision, and there is a great need that such an external-object protecting function be enhanced further to protect an external colliding object more reliably and sufficiently.

In view of the foregoing prior art problems, it is an object of the present invention to provide an improved technique which can fulfill two opposed functions of sufficiently securing a predetermined rigidity of a vehicular hood and of protecting an external colliding object from a secondary collision against the vehicular hood.

In order to accomplish the above-mentioned object, the present invention provides an improved vehicular hood openably and closably attached to a vehicle body by means of left and right hinges, the vehicular hood including a hood skin, and an inner hood panel superposed on an substantially entire reverse surface of the hood skin for reinforcing the hood skin, the inner hood panel comprising: left and right hinge mounting portions provided on an opening/closing proximal end portion of the inner hood panel for mounting thereon the left and right hinges; left and right reinforcing beam portions extending from the left and right hinge mounting portions, respectively, toward an opening/closing distal end portion of the inner hood panel; a through-hole formed substantially centrally through the inner hood panel to open toward the reverse surface of the hood skin and elongated in a width direction of the vehicle, the through-hole extending between the left and right reinforcing beam portions; a hood panel distal end section extending from the through-hole to the opening/closing distal end portion; and a joining flange provided along a peripheral edge of the through-hole for being joined to the reverse surface of the hood skin. Further, the hood panel distal end section includes: a first flat surface section extending from the opening/closing distal end portion toward the joining flange; a slanting surface section extending from an extending end of the first flat surface section toward the joining flange while slanting toward the reverse surface of the hood skin; a second flat surface section extending from an extending end of the slanting surface section toward the joining flange; and a connecting section extending from an extending end of the second flat surface section to the joining flange. Further, the first and second flat surface sections are disposed substantially parallel to the reverse surface of the hood skin, and a height from the first flat surface section to the reverse surface of the hood skin is greater than a height from the second flat surface section to the reverse surface of the hood skin.

In the vehicular hood of the present invention, the left and right reinforcing beam portions extend from the left and right hinge mounting portions, respectively, toward the opening/closing distal end portion. Thus, although the through-hole elongated in the width direction is formed substantially centrally through the thickness of the inner hood panel, the inner hood panel can have a sufficient rigidity because of the provision of the left and right reinforcing beam portions. Also, intermediate opposed regions of the through-hole need not be reinforced with a particular reinforcing member. Namely, opposed regions of the through-hole located between the distal end section and the proximal end section of the inner hood panel need not be interconnected with a separate reinforcing member. Further, at a portion corresponding in position to the through-hole of the inner hood panel, the hood skin may be constructed to have a reduced rigidity against external force acting in a direction across (the thickness of) the skin. With such a construction, an external colliding object like a pedestrian can be effectively protected at the time of a secondary collision.

Further, the hood panel distal end section, extending from the through-hole to the opening/closing distal end portion, is of a stepped configuration having the first flat surface section (i.e., front or first step section) located adjacent to the opening/closing distal end portion, and the second flat surface section (i.e., rear or second step section) located rearwardly of the first flat surface section. The first and second flat surface sections are interconnected by the slanting surface section that slants toward the reverse surface of the hood skin. With the hood panel distal end section formed in the stepped configuration having the front and rear step sections, a predetermined rigidity required of a front section of the hood skin can be secured sufficiently by the distal end section of the inner hood panel. As a result, a predetermined rigidity required of a front section of the hood can be secured sufficiently.

In the vehicular hood of the present invention, the second flat surface section located close to the through-hole is an area intended for securing rigidity of a portion of the inner hood panel around the through-hole, while the first flat surface section located close to the opening/closing distal end portion is an area intended for protecting an external colliding object having been brought into a secondary collision against the hood. For these purposes, the height from the first flat surface section to the reverse surface of the hood skin is set greater than the height from the second flat surface section to the reverse surface of the hood skin. Thus, the hood skin having received (i.e., having been subjected to) collision energy of the secondary collision can deform greatly toward the first flat surface section to thereby effectively absorb the collision energy. As a result, the present invention can protect the external colliding object sufficiently and reliably.

Generally, an external colliding object is brought into a secondary collision against the hood in a front-upper-to-rear-lower direction, namely, obliquely rearwardly and downwardly. By contrast, the slanting surface section in the present invention slants rearwardly and upwardly; namely, the slanting surface section slants substantially perpendicularly to the colliding direction of the external colliding object. Thus, the slanting surface section can present a relative small rigidity with respect to the colliding direction. Thus, the slanting surface section having been subjected to the collision energy of the secondary collision can easily deform to thereby effectively absorb the collision energy. As a result, the present invention can sufficiently protect the external colliding object.

In the aforementioned manner, the present invention can fulfill the two opposed functions of sufficiently securing a predetermined rigidity of the vehicular hood and of protecting an external colliding object having been brought into a secondary collision against the vehicular hood.

In an embodiment, the first flat surface section has a greater length in a front-rear direction of the vehicle than the second flat surface section. Namely, in the distal end section of the inner hood panel, the length, in the front-to-rear direction, of the first flat surface section, located remotely from the reverse surface of the hood skin, is set greater than the length of the second flat surface section located closer to the reverse surface, so that collision energy of a second collision can be absorbed easily.

As noted above, the first flat surface section is an area intended for protecting an external colliding object having been brought into a secondary collision against the hood. Because the length of the first flat surface section is greater than the length of the second flat surface section, an area over which the hood skin, having been subjected to collision energy, deforms greatly toward the first flat surface section can be increased considerably, as a result of which the protecting performance of the hood in that area can be enhanced. Besides, with the length of the first flat surface section set greater than the length of the second flat surface section, the necessary surface rigidity against external force acting in a direction across (the thickness of) the first flat surface section can be reduced. Thus, when the hood skin, having been subjected to collision energy, has hit the first flat surface section, the first flat surface section can deform to the reverse side of the hood relatively easily and thereby further absorb the collision energy As a result, the present invention can protect the colliding object even more sufficiently

Further, the second flat surface section located close to the through-hole is an area that connects, via the connecting section, to the joining flange, fixedly joined to the reverse surface of the hood skin, for securing the rigidity of the portion around the through-hole. Therefore, the second flat surface section is required to have a relatively great rigidity in the direction across it. For that purpose, the second flat surface section has a small length in the front-rear direction. Because, if the length of the second flat surface section is too great, the rigidity of the second flat surface section in the direction across the second flat surface section will decrease, and the second flat surface section will have a lower reinforcing effect. With the length of the second flat surface section set smaller than the length of the first flat surface section as noted above, the present invention can achieve an enhanced surface rigidity of the second flat surface section in the direction across the second flat surface section.

Furthermore, because of the small length of the second flat surface section, a point (i.e., inflection point) at which the second flat surface section is bent positively in the direction across the second flat surface section when the hood skin, having been subjected to collision energy of a secondary collision, has hit the second flat surface section can be preset at an optimal point. Thus, the second flat surface section can deform toward the reverse side of the hood relatively easily and thereby even further absorb the collision energy.

In an embodiment, the left and right reinforcing beam portions extend both to the second flat surface section and to the slanting surface section. Thus, a load acting on the second flat surface section and slanting surface section can be effectively borne by the left and right reinforcing beam portions. Thus, although the through-hole elongated in the width direction is formed substantially centrally through the inner hood panel, the inner hood panel can have an even more sufficient rigidity because of the provision of the left and right reinforcing beam portions

In an embodiment, the inner hood panel has a proximal end section extending from the through-hole to the opening/closing proximal end portion, and the proximal end section of the inner hood panel having a third flat surface section. The third flat surface section is disposed substantially parallel to the reverse surface of the hood skin, and a height from the third flat surface section to the reverse surface of the hood skin is substantially equal to the height from the second flat surface section to the reverse surface of the hood skin. Further, an insulator may be provided on and between the second flat surface section and the third flat surface section. The insulator is fixedly attached to the vehicular hood using the second flat surface section. Further, because the insulator can be partly superposed on the second and third flat surface sections, good sealability can be secured between the insulator and the flat surface sections.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a front perspective view of a vehicle provided with an embodiment of a vehicular hood of the present invention;
Fig. 2 is a perspective view of an inner hood panel of the vehicular hood of Fig. 1 as viewed from a hood skin;
Fig. 3 is a sectional view taken along line 3 - 3 of Fig. 2;
Fig. 4 is a sectional view taken along line 4 - 4 of Fig. 2;
Fig. 5A is a side view showing the embodiment of the vehicular hood;
Fig. 5B is a view showing a comparative conventional example relevant to the embodiment of the vehicular hood shown in Fig. 5A;
Fig. 6 is a perspective view of the vehicular hood, which particularly shows the inner hood panel provided with an insulator; and
Fig. 7 is a sectional view taken along line 7 - 7 of Fig. 6.

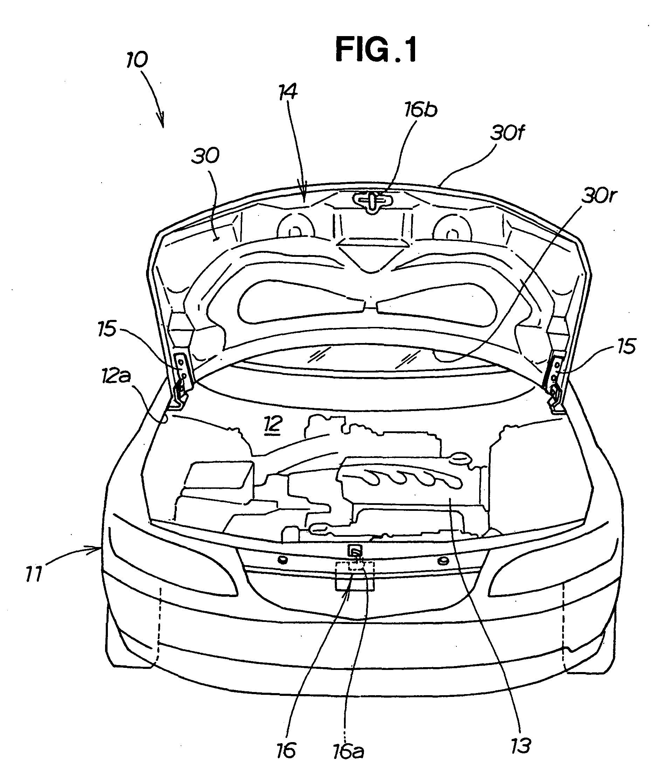

Initial reference is made to Fig. 1 showing, in front perspective, a vehicle 10, which particularly shows a vehicular hood 14 in a fully opened position. The hood 14 is provided on a front section of a vehicle body 11. The hood 14 is a front-opening member for opening and closing an upper opening 12a of an engine room (power unit housing) 12 provided in a front section of the vehicle body 11. An engine (power source) 13 is accommodated in the engine room 12.

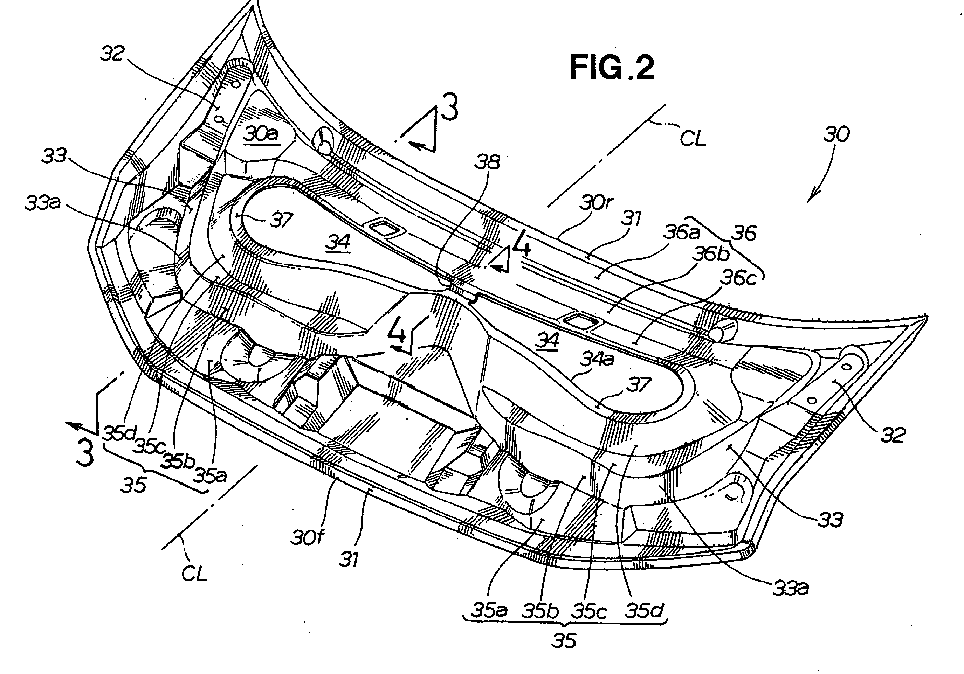

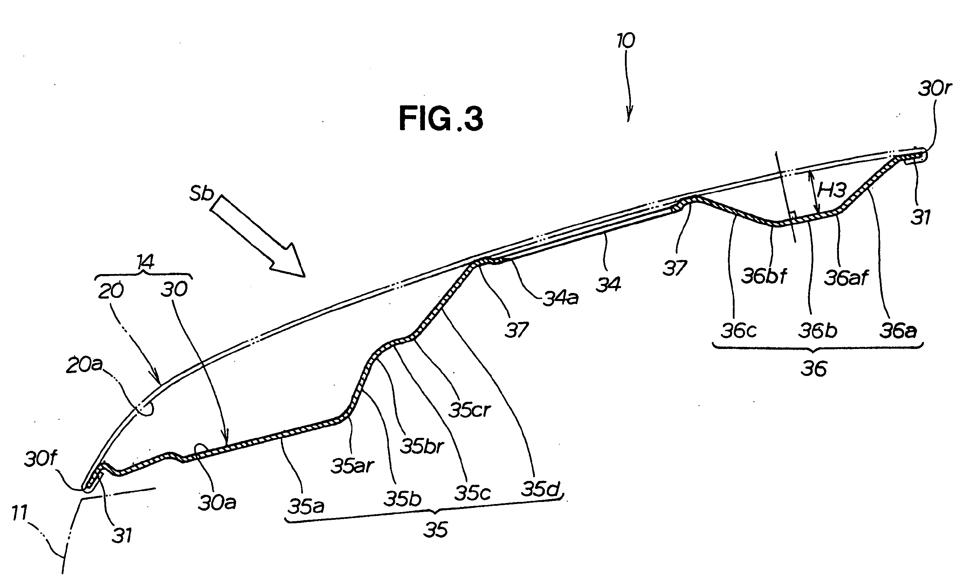

Preference is made next to Fig. 2 showing, in perspective, an inner hood panel 30 of the hood 14 as viewed from a hood skin, and to Fig. 3 showing, in cross-section, the hood 14 in the fully-opened position as viewed from a side of the vehicle 10 shown in Fig. 1. More specifically, Fig. 3 shows a sectional configuration of the hood 14 taken along the 3 - 3 line of Fig. 2.

As shown in Fig. 3, the hood 41 includes the hood skin 20 functioning as an outer plate, and the inner hood panel (hood frame) 30 for reinforcing the hood skin 20. The hood skin 20 and the inner hood panel 30 are each formed of a metal plate material, such as steel or lightweight alloy. The inner hood panel 30 is superposed on and integrally joined to a substantially entire reverse surface of the hood skin 20. The hood skin 20 has a sectional shape curved upwardly and rearwardly from its front end and then gently extending upwardly and rearwardly, as shown in Fig. 3.

As shown in Fig. 1, the hood 14 is openably/closably attached at its rear end portion to the vehicle body 11 by means of left and right hinges 15. A front end portion of the hood 14 is lockable to the vehicle body 11 via a lock mechanism 16 when the hood 14 is in a closed position. The lock mechanism 16 includes a latch 16a provided on the vehicle body 11, and a striker 16b provided on the inner hood panel 30.

A rear end portion 30r, in the vehicle body's front-rear direction, of the inner hood panel 30 on which the left and right hinges 15 are provided will hereinafter be referred to as "opening/closing proximal end portion 30r", while a front end portion 30f, in the vehicle body's front-rear direction, of the inner hood panel 30 on which the striker 16b is provided will hereinafter be referred to as "opening/closing distal end portion 30f".

As shown in Fig. 2, the inner hood panel 30 is formed by bending the plate material and has a left-right symmetric shape with respect to a centerline CL extending centrally through the width of the vehicle. As shown in Figs. 2 and 3, the inner hood panel 30 has an outer frame portion 31, left and right hinge mounting portions 32, left and right reinforcing beam portions 33, a through-hole (opening portion) 34, a front or distal end section 35, and a proximal end section 36.

The outer frame portion 31 is formed along the entire outer peripheral edge of the inner hood panel 30. The left and right hinge mounting portions 32 are provided on the opening/closing proximal end portion 30r for mounting thereon the left and right hinges 15 (Fig. 1).

The left and right reinforcing beam portions 33 are elongated portions extending from the left and right hinge mounting portions 32, respectively, toward the opening/closing distal end portion 30f and protrude from the upper surface 30a toward the reverse surface (or reverse side) 20a of the hood skin 20.

The through-hole (opening portion) 34 is formed substantially centrally through the thickness of the inner hood panel 30 and extends between the left and right reinforcing beam portions 33. This through-hole (opening portion) 34 faces, or opens toward, the reverse surface 20a of the hood skin 20 and is elongated in the width direction of the vehicle. A joining flange 37 is formed on the upper surface 30a along the entire peripheral edge 34a of the through-hole 34, and this flange 37 is fixedly joined to the reverse surface 20a of the hood skin 20 by adhesive or welding.

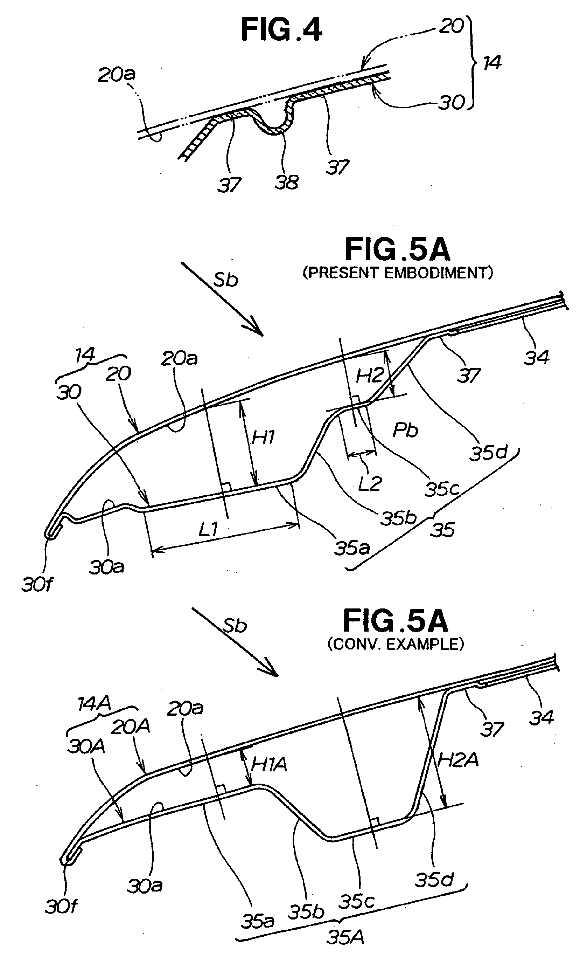

As shown in Figs. 2 and 4, opposed front and rear regions of the peripheral edge 34a of the through-hole 34 are interconnected by a connection portion 38 at a position on the centerline CL. Namely, because the through-hole 34 is elongated in the width direction of the vehicle, the connection portion 38 is provided, as necessary, to prevent unwanted distortion of the through-hole 34 during the bending formation of the inner hood panel 30. The connection portion 38 is dented downward and has no or almost no function of reinforcing the inner hood panel 30; such a connection portion 38 may or may not be provided as desired.

As shown in Figs. 2 and 3, the distal end section 35 of the inner hood panel 30 is formed to extend from the through-hole 34 to the opening/closing distal end portion 30f, and it is of a stepped configuration having front and rear steps. More specifically, the hood panel distal end section 35 includes a first flat surface section 35a comprising left and right first flat surface portions 35a, a slanting surface section 35b comprising left and right slanting surface portions 35b, a second flat surface section 35c comprising left and right second flat surface portions 35c, and a connecting section 35d comprising left and right connecting portions 35d.

As viewed from above the inner hood panel 30, the left and right first flat surface portions 35a are located slightly closer to the centerline CL than the left and right reinforcing beam portions 33 and extend from the opening/closing distal end portion 30f toward the front end edge of the joining flange 37 (i.e., toward the rear of the inner hood panel 30).

The left and right slanting surface portions 35b extend from the extending ends (i.e., rear ends) 35ar of the left and right first flat surface portions 35a toward the front end edge of the joining flange 37 while slanting upward toward the reverse surface 20a of the hood skin 20.

The left and right second flat surface portions 35c extend from the extending ends (rear ends 35br) of the left and right slanting surface portions 35b toward the front end edge of the joining flange 37.

The left and right connecting portions 35d extend from the extending ends (rear ends) 35cr of the left and right second flat surface portions 35c to the front end edge of the joining flange 37 while slanting upward toward the reverse surface 20a of the hood skin 20.

Fig. 5A shows the distal end section 35 of the hood 14 according to the instant embodiment of the invention. The first flat surface section 35a is disposed substantially parallel to a portion of the hood skin's reverse surface 20a which the first flat surface section 35a is opposed to. Similarly, the second flat surface section 35c is disposed substantially parallel to portions of the hood skin's reverse surface 20a which the second flat surface section 35c is opposed to. A height H1 is defined from the first flat surface section 35a to the reverse surface 20a of the hood skin 20, while a height H2 is defined from the second flat surface section 35c to the reverse surface 20a of the hood skin 20. The height H1 (i.e., first height H1) is greater than the height H2 (i.e., second height H2).

Further, the first flat surface section 35a has a length L1 in the front-rear direction, and the second flat surface section 35c has a length L2 in the front-rear direction. The length L1 (i.e., first length L1 is greater than the length L2 (i.e., second length L2).

The foregoing may be summarized as follows. In the instant embodiment, as shown in Fig. 2, the left and right reinforcing beam portions 33 of the inner hood panel 30 extend from the left and right hinge mounting portions 32, respectively, toward the opening/closing distal end portion 30f. Thus, although the through-hole 34 elongated in the width direction is formed substantially centrally through the inner hood panel 30, the inner hood panel 30 can have a sufficient rigidity because of the provision of the left and right reinforcing beam portions 33. Also, intermediate opposed regions of the through-hole 34 need not be reinforced with a particular reinforcing member. Namely, opposed regions of the through-hole 34 between the front or distal end section 35 and the rear or proximal end section 36 need not be interconnected with a reinforcing member. Further, the hood skin 20 may be constructed to have a reduced surface rigidity at a portion thereof corresponding in position to the through-hole 34 of the inner hood panel 30. With such a construction, a colliding external colliding object like a pedestrian (not shown) can be effectively protected at the time of a secondary collision.

In the aforementioned manner, the instant embodiment can fulfill the two opposed functions of sufficiently securing a predetermined rigidity of the vehicular hood 14 and of protecting an external colliding object having been brought into a secondary collision with the vehicular hood.

Further, as viewed from above the inner hood panel 30, the left and right reinforcing beam portions 33 extend both to the left and right slanting surface portions 35b and to the left and right second flat surface portions 35c. Namely, the left slanting surface portion 35b and the left second flat surface portion 35c extend from the extending end 33a of the left reinforcing beam portion 33 to near the centerline CL (i.e., near the center in the width direction of the vehicle), and the right slanting surface portion 35b and the right second flat surface portion 35c extend from the extending end 33a of the right reinforcing beam portion 33 to near the centerline CL (i.e., near the center in the width direction of the vehicle). Thus, a combined structure of the left reinforcing beam portion 33, left slanting surface portion 35b and left second flat surface portion 35c has a generally L shape as viewed in plan, and similarly, a combined structure of the right reinforcing beam portion 33, right slanting surface portion 35b and right second flat surface portion 35c has a generally L shape as viewed in plan.

With the left and right reinforcing beam portions 33 extending to the left and right slanting surface portions 35b and to the left and right second flat surface portions 35c as noted above, a load acting on the left and right slanting surface portions (i.e., slanting surface section) 35b and left and right second flat surface portions (i.e., second flat surface section) 35c can be effectively borne by the left and right reinforcing beam portions 33. Thus, although the through-hole 34 elongated in the width direction is formed substantially centrally through the inner hood panel 30, the inner hood panel 30 can secure rigidity even more sufficiently by means of the left and right reinforcing beam portions 33.

Further, in the embodiment shown in Fig. 5A, the hood panel distal end section 35, formed to extend from the through-hole 34 to the opening/closing distal end portion 30f, has a stepped configuration having front and rear steps. Namely, the hood panel distal end section 35 has the first flat surface section 35a as a front or first step section, and the second flat surface section 35c as a rear or second step section located rearwardly of the first step section 35a and at a higher level than the first step section 35a. The first flat surface section 35a and the second flat surface section 35c are interconnected by the slanting surface section 35b slanting toward the reverse surface 20a of the hood skin 20. With the hood panel distal end section 35 formed in the stepped configuration having the front and rear step sections, a predetermined rigidity required of a front section of the hood skin 20 can be secured sufficiently by the distal end section 35. As a result, a predetermined rigidity required of a front section of the hood 14 can be secured sufficiently

Further, the second flat surface section 35c, which is located close to the through-hole 34 than the first flat surface section 35a, is an area intended for securing rigidity of a portion around the through-hole 34 in the inner hood panel 30. On the other hand, the first flat surface section 35a, which is located closer to the opening/closing distal end portion 30f is an area intended for protecting an external colliding object having been brought into a secondary collision against the hood 14. For these purposes, the first height H1 from the first flat surface section 35a to the reverse surface 20a of the hood skin 20 is set greater than the second height H2 from the second flat surface section 35c to the reverse surface 20a of the hood skin 20, so that the hood skin 20 having been subjected to energy of the secondary collision can deform greatly toward the first flat surface section 35a to effectively absorb the collision energy. As a result, the instant embodiment can protect sufficiently the external colliding object.

Fig. 5B shows a comparative conventional example of a hood 14A relevant to the embodiment 14 shown in Fig. 5A. This comparative conventional example of the hood 14A comprises a hood skin 20A and an inner hood panel 30A. The inner hood panel 30A has a distal end section 35A that is generally similar in basic construction to the distal end section 35 provided in the embodiment of the present invention. The comparative conventional example 14A is different from the embodiment 14 in the following respects. Namely, in the comparative conventional example 14A, a first height H1A is defined from a first flat surface section 35a to the reverse surface 20a of the hood skin 20, while a second height H2A is defined from the second flat surface section 35c to the reverse surface 20a of the hood skin 20. The first height H1A is smaller than the second height H2A (i.e., H1A < H2A). Therefore, in the comparative conventional example 14A, a slanting surface section 35b slants rearwardly and downwardly.

Generally, an external colliding object is brought into a secondary collision against the hood in a front-upper-to-rear-lower direction Sb both in the conventional example 14A and in the embodiment 14 (see arrows Sb in Figs. 5A and 5B). Thus, the slanting surface section 35b in the comparative conventional example 14A slants in substantially the same direction as the colliding direction Sb, so that the slanting surface section 35b in the comparative conventional example 14A can present a great rigidity with respect to the colliding direction Sb and hence collision energy.

By contrast, the slanting surface section 35b in the embodiment shown in Fig. 5A slants rearwardly and upwardly as noted above, so that it slants substantially perpendicularly to the colliding direction Sb of the external colliding object. Thus, the slanting surface section 35b in the embodiment can present a relative small rigidity with respect to the colliding direction and hence collision energy. Thus, the slanting surface section 35b having been subjected to the collision energy of the secondary collision can easily deform to effectively absorb the collision energy. As a result, the embodiment 14 can sufficiently protect the external colliding object.

Further, in the embodiment of the present invention, the first flat surface section 35a has the first length L1 in the front-rear direction greater than the second length L2, in the front-rear direction, of the second flat surface section 35c. This is because the collision energy of the secondary collision can be absorbed more easily if the first length L1 of the first flat surface section 35a, located remotely from the reverse surface 20a of the hood skin 20, is set greater than the second length L2 of the second flat surface section 35c located closer to the reverse surface 20a.

As noted above, the first flat surface section 35a is intended for protecting an external colliding object having been brought into a secondary collision against the hood 14. Because the first length L1 of the first flat surface section 35a is greater than the second length L2 of the second flat surface section 35c, an area over which the hood skin 20, having been subjected to collision energy, deforms toward the first flat surface section 35a can be increased considerably, as a result of which the protecting performance of the hood 14 in that area can be enhanced. Besides, with the first length L1 of the first flat surface section 35a set greater than the second length L2 of the second flat surface section 35c, the necessary rigidity of the first flat surface section 35a in the direction across the first flat surface section 35a can be reduced. Thus, when the hood skin 20, having been subjected to collision energy, has hit the first flat surface section 35a, the first flat surface section 35a can deform to the reverse side of the hood relatively easily and thereby even more effectively absorb the collision energy. As a result, the embodiment can protect the colliding object even more sufficiently

Further, the second flat surface section 35c located closer to the through-hole 34 is an area that connects, via the connecting section 35d, to the joining flange 37, joined to the reverse surface 20a of the hood skin 20, for securing the rigidity of a portion around the through-hole 34. Therefore, the second flat surface section 35c is required to have a relatively great rigidity in the direction across the surface section 35c. For that purpose, the second flat surface section 35c has the small length L2 in the front-rear direction. If the length L2 of the second flat surface section 35c is too great, the rigidity of the second flat surface section 35c in the direction across the surface section 35c will decrease, and the surface section 35c will have a lower reinforcing effect. With the length L2 of the second flat surface section 35c set smaller than the length L1 of the first flat surface section 35a as noted above, the embodiment can achieve an enhanced rigidity of the second flat surface section 35c in the direction across the surface section 35c.

Furthermore, because of the small length L2 of the second flat surface section 35c, a point (i.e., inflection point) at which the second flat surface section 35c is bent positively in the direction across the thickness of the second flat surface section 35c when the hood skin 20, having been subjected to collision energy of a secondary collision, has hit the surface section 35c can be preset at an optimal point. Thus, the second flat surface section 35c can deform to the reverse side of the hood relatively easily and thereby even further absorb the collision energy.

As shown in Figs. 2 and 3, the proximal end section 36 of the inner hood panel 30, which is a section extending from the through-hole 34 to the opening/closing proximal end portion 30r, includes a first slanting surface section 36a, a flat surface section (third flat surface section) 36b and a second slanting surface section 36c.

The first slanting surface section 36a is an elongated section formed from one end to the other in the width direction of the vehicle, and it extends from the opening/closing proximal end portion 30r toward the rear end edge of the joining flange 37 while slanting downwardly away from the reverse surface 20a of the hood skin 20.

The third flat surface section 36b is an elongated section extending from the left reinforcing beam portion 33 to the right reinforcing beam portion 33 and extending from the extending end (front end) 36af of the first slanting surface section 36a toward the rear end edge of the joining flange 37.

The second slanting surface section 36c is an elongated section formed from the left reinforcing beam portion 33 to the right reinforcing beam portion 33 and extending from the extending end (front end) 36bf of the flat surface section 36b to the rear end edge of the joining flange 37.

The third flat surface section 36b is disposed substantially parallel to a portion of the hood skin's reverse surface 20a which the flat surface section 36b is opposed to. A height H3 (i.e., third height H3) is defined from the third flat surface section 36b to the reverse surface 20a of the hood skin ,20. The third height H3 is set substantially equal to the above-mentioned second height H2.

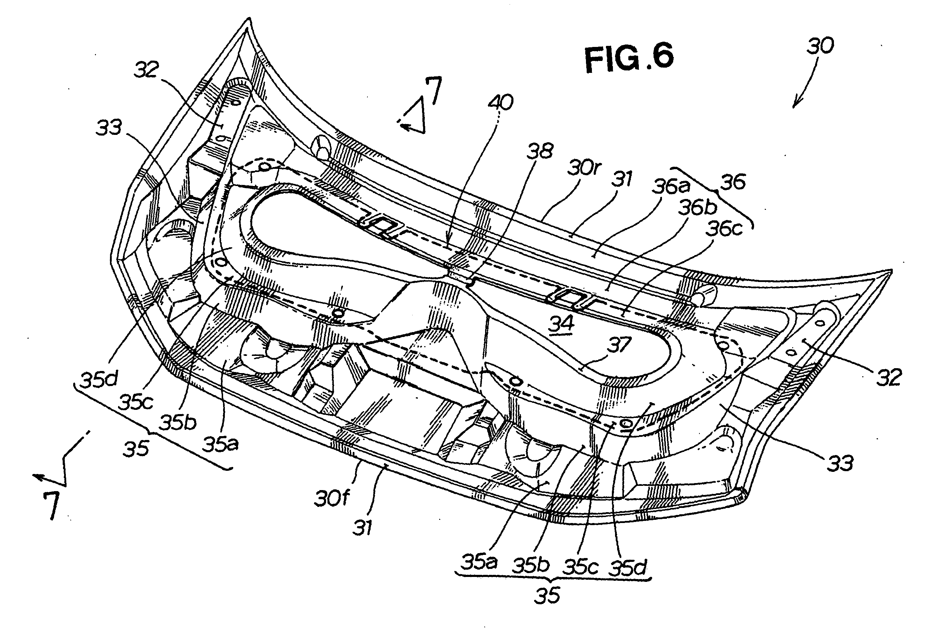

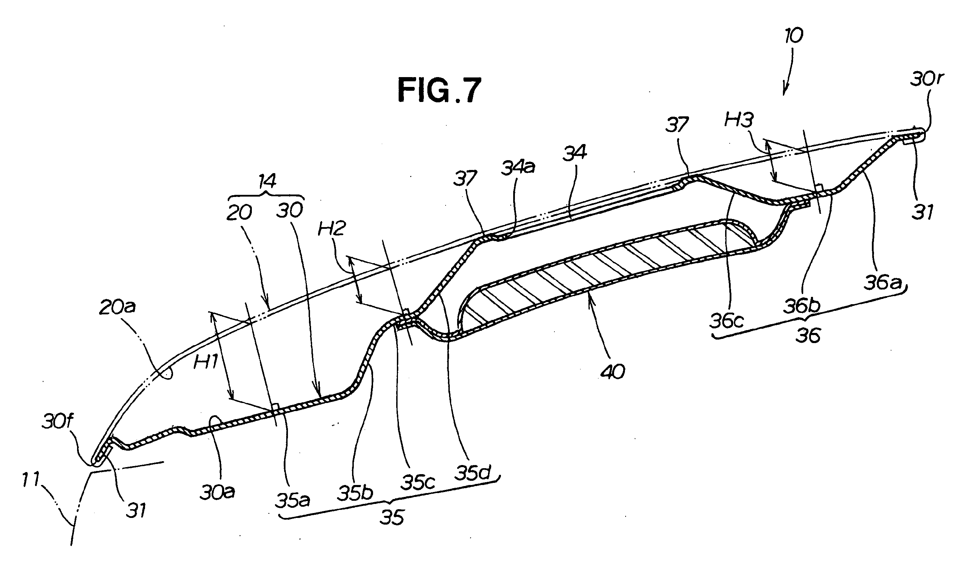

As shown in Figs. 6 and 7, an insulator 40 is disposed on and between the left and right second flat surface portions 35c of the second flat surface section 35 and the third flat surface section 36b of the hood panel proximal end section 36 for insulating sound inside and outside the hood 14, and this insulator 40 is fixedly attached using the second flat surface section 35c. Further, because the insulator 40 can be partly superposed on the flat surface sections 35c and 36b, good sealability can be secured between the insulator 40 and the flat surface sections 35c and 36b.

The vehicular hood 14 of the present invention is well suited for application to automotive vehicles having an engine room provided in a front section of a vehicle body.

Inner hood panel (30) includes: a through-hole (34) elongated in a vehicle width direction; a distal end section (35) formed between the through-hole and an opening/closing distal end portion (30f); and a flange (37) provided along the through-hole for being joined to the reverse surface (20a) of a hood skin (20). The distal end section (35) includes: a first flat surface section (35a) extending from the distal end portion (30f) toward the flange; a slanting surface section (35b) extending from the first flat surface section (35a) toward the flange while slanting toward the reverse surface (20a); a second flat surface section (35c) extending from the slanting surface section toward the flange; and a connecting section (35d) extending from the second flat surface section to the flange. Height (H1) from the first flat surface section to the reverse surface is greater than a height (H2) from the second flat surface section to the reverse surface.

## Claims

1. A vehicular hood (14) openably and closably attached to a vehicle body (11) by means of left and right hinges (15), the vehicular hood including a hood skin (20), and an inner hood panel (30) superposed on a substantially entire reverse surface (20a) of the hood skin for reinforcing the hood skin,
the inner hood panel (30) comprising:
left and right hinge mounting portions (32) provided on an opening/closing proximal end portion (30r) of the inner hood panel for mounting thereon the left and right hinges (15);
left and right reinforcing beam portions (33) extending from the left and right hinge mounting portions (32), respectively, toward an opening/closing distal end portion (30f) of the inner hood panel;
a through-hole (34) formed substantially centrally through the inner hood panel (30) to open toward the reverse surface (20a) of the hood skin (20) and elongated in a width direction of the vehicle (10), the through-hole (34) extending between the left and right reinforcing beam portions (33);
a hood panel distal end section (35) extending from the through-hole (34) to the opening/closing distal end portion (30f); and
a joining flange (37) provided along a peripheral edge of the through-hole (34) for being joined to the reverse surface (20a) of the hood skin (20),
**characterised in that** the hood panel distal end section (35) includes:
a first flat surface section (35a) extending from the opening/closing distal end portion (30f) toward the joining flange (37);
a slanting surface section (35b) extending from an extending end (35ar) of the first flat surface section (35a) toward the joining flange (37) while slanting toward the reverse surface (20a) of the hood skin;
a second flat surface section (35c) extending from an extending end (35cr) of the slanting surface section (35b) toward the joining flange (37); and
a connecting section (35d) extending from an extending end (35cr) of the second flat surface section (35c) to the joining flange (37),
wherein the first and second flat surface sections (35a, 35c) are disposed substantially parallel to the reverse surface (20a) of the hood skin, and a height (H1) from the first flat surface section (35a) to the reverse surface (20a) of the hood skin is greater than a height (H2) from the second flat surface section (35c) to the reverse surface (20a) of the hood skin.

2. The vehicular hood of claim 1, wherein the first flat surface section (35a) has a length (L1 in a front-rear direction of the vehicle greater than a length (L2), in the front-rear direction, of the second flat surface section (35c).

3. The vehicular hood of claim 1 or 2, wherein the left and right reinforcing beam portions (33) extend both to the second flat surface section (35c) and to the slanting surface section (35b).

4. The vehicular hood according to any one of claims 1 to 3, wherein the inner hood panel (30) has a hood panel proximal end section (36) extending from the through-hole (34) to the opening/closing proximal end portion (30r), the hood panel proximal end section (36) having a third flat surface section (36b), the third flat surface section (36b) being disposed substantially parallel to the reverse surface (20a) of the hood skin,
a height (H3) from the third flat surface section (36b) to the reverse surface (20a) of the hood skin being substantially equal to the height (H2) from the second flat surface section (35c) to the reverse surface (20a) of the hood skin,
an insulator (40) being provided on and between the second flat surface section (35c) and the third flat surface section (36b).

## Patentansprüche

1. Fahrzeughaube (14),
welche an einer Fahrzeugkarosserie (11) mittels eines rechten und eines linken Scharniers (15) öffenbar und schließbar angebracht ist,
wobei die Fahrzeughaube eine Haubenschale (20) und eine innere Haubenverkleidung (30) umfasst, welche eine im Wesentlichen gesamte Rückfläche (20a) der Haubenschale überlagert, um die Haubenschale zu verstärken,
wobei die innere Haubenverkleidung (30) umfasst:
einen rechten und einen linken Scharniermontageabschnitt (32), welche an einem einer Öffnungs-/Schließstelle proximalen Endabschnitt (30r) der inneren Haubenverkleidung vorgesehen sind, um darauf das linke und das rechte Scharnier (15) zu montieren;
einen linken und einen rechten Verstärkungsträgerabschnitt (33), welche sich jeweils von dem linken und dem rechten Scharniermontageabschnitt (32) in Richtung eines der Offnungs-/Schließstelle distalen Endabschnitts (30f) der inneren Haubenverkleidung erstrecken;
ein Durchgangsloch (34), welches im Wesentlichen zentral durch die innere Haubenverkleidung (30) gebildet ist, um sich in Richtung der Rückfläche (20a) der Haubenschale (20) zu öffnen, und welches in einer Breitenrichtung des Fahrzeugs (10) länglich ausgebildet ist,
wobei das Durchgangsloch (34) sich zwischen dem linken und dem rechten Verstärkungsträgerabschnitt (33) erstreckt;
einen distalen Endabschnitt (35) der Haubenverkleidung, welcher sich von dem Durchgangsloch (34) zu dem der Öffnungs-/Schließstelle distalen Endabschnitt (30f) erstreckt; und
einen Verbindungsflansch (37), welcher entlang einem Umfangsrand des Durchgangslochs (34) vorgesehen ist, um mit der Rückfläche (20a) der Haubenschale (20) verbunden zu sein,
**dadurch gekennzeichnet,**
**dass** der distale Endabschnitt (35) der Haubenverkleidung umfasst:
einen ersten ebenen Flächenabschnitt (35a), welcher sich von dem der Öffnungs-/Schließstelle distalen Endabschnitt (30f) zu dem Verbindungsflansch (37) hin erstreckt;
einen schrägen Flächenabschnitt (35b), welcher sich von einem ausgedehnten Ende (35ar) des ersten ebenen Flächenabschnitts (35a) in Richtung des Verbindungsflanschs (37) erstreckt, während er sich in Richtung der Rückfläche (20a) der Haubenschale neigt;
einen zweiten ebenen Flächenabschnitt (35c), welcher sich von einem ausgedehnten Ende (35cr) des schrägen Flächenabschnitts (35b) in Richtung des Verbindungsflanschs (37) erstreckt; und
einen Verbindungsabschnitt (35d), welcher sich von einem ausgedehnten Ende (35cr) des zweiten ebenen Flächenabschnitts (35c) zu dem Verbindungsflansch (37) hin erstreckt,
wobei der erste und der zweite ebene Flächenabschnitt (35a, 35c) zur Rückfläche (20a) der Haubenschale im Wesentlichen parallel angeordnet sind, und
wobei eine Höhe (H1) von dem ersten ebenen Flächenabschnitt (35a) zu der Rückfläche (20a) der Haubenschale größer als eine Höhe (H2) von dem zweiten ebenen Flächenabschnitt (35c) zu der Rückfläche (20a) der Haubenschale ist.

2. Fahrzeughaube nach Anspruch 1,
wobei der erste ebene Flächenabschnitt (35a) eine Länge (L1) in einer Vorwärts-Rückwärts-Richtung des Fahrzeugs aufweist, welche größer ist, als eine Länge (L2) in der Vorwärts-Rückwärts-Richtung des zweiten ebenen Flächenabschnitts (35c).

3. Fahrzeughaube nach Anspruch 1 oder 2,
wobei der linke und der rechte Verstärkungsträg.erabschnitt (33) sich sowohl zu dem zweiten ebenen Flächenabschnitt (35c) hin als auch zu dem schrägen Flächenabschnitt (35b) hin erstrecken.

4. Fahrzeughaube nach einem der Ansprüche 1 bis 3,
wobei die innere Haubenverkleidung (30) einen der Haubenverkleidung proximalen Endabschnitt (36) aufweist, welcher sich von dem Durchgangsloch (34) zu dem der Öffnungs-/Schließstelle proximalen Endabschnitt (30r) hin erstreckt,
wobei der der Haubenverkleidung proximalen Endabschnitt (36) einen dritten ebenen Flächenabschnitt (36b) aufweist, wobei der dritte ebene Flächenabschnitt (36b) zur Rückfläche (20a) der Haubenschale im Wesentlichen parallel angeordnet ist,
wobei eine Höhe (H3) von dem dritten ebenen Flächenabschnitt (36b) zu der Rückfläche (20a) der Haubenschale der Höhe (H2) von dem zweiten ebenen Flächenabschnitt (35c) zu der Rückfläche (20a) der Haubenschale im Wesentlichen gleich ist,
wobei eine Isolierung (40) an dem zweiten ebenen Flächenabschnitt (35c) und dem dritten ebenen Flächenabschnitt (36b) und dazwischen vorgesehen ist.

## Revendications

1. Capot de véhicule (14) attaché avec faculté d'ouverture et de fermeture à une carrosserie de véhicule (11) au moyen de charnières gauche et droite (15), le capot de véhicule incluant un habillage de capot (20), et un panneau de capot interne (30) superposé sur une surface inverse sensiblement entière (20a) de l'habillage de capot pour renforcer l'habillage de capot,
le panneau de capot interne (30) comprenant :
des portions de montage de charnières gauche et droite (32) disposées sur une portion d'extrémité proximale d'ouverture/fermeture (30r) du panneau de capot interne pour monter dessus les charnières gauche et droite (15) ;
des portions de poutre de renfort gauche et droite (33) s'étendant à partir des portions de montage de charnières gauche et droite (32), respectivement, vers une portion d'extrémité distale d'ouverture/fermeture (30f) du panneau de capot interne ;
un trou traversant (34) formé sensiblement centralement à travers le panneau de capot interne (30) pour une ouverture vers la surface inverse (20a) de l'habillage de capot (20) et allongé dans une direction de la largeur du véhicule (10), le trou traversant (34) s'étendant entre les portions de traverse de renfort gauche et droite (33) ;
une section d'extrémité distale de panneau de capot (35) s'étendant du trou traversant (34) à la portion d'extrémité distale d'ouverture/fermeture (30f) ; et
une bride de jonction (37) disposée le long d'un bord périphérique du trou traversant (34) pour être jointe à la surface inverse (20a) de l'habillage de capot (20),
**caractérisé en ce que** la section d'extrémité distale de panneau de capot (35) inclut :
une première section de surface plate (35a) s'étendant de la portion d'extrémité distale d'ouverture/fermeture (30f) vers la bride de jonction (37) ;
une surface de surface de section inclinée (35b) s'étendant d'une extrémité d'extension (35ar) de la première section de surface plate (35a) vers la bride de jonction (37) tout en s'inclinant vers la surface inverse (20a) de l'habillage de capot ;
une deuxième section de surface plate (35c) s'étendant depuis une extrémité d'extension (35cr) de la section de surface inclinée (35b) vers la bride de jonction (37) ; et
une section de raccordement (35d) s'étendant depuis une extrémité d'extension (35cr) de la deuxième section de surface plate (35c) à la bride de jonction (37),
dans lequel les première et deuxième sections de surface plate (35a, 35c) sont disposées sensiblement parallèles à la surface inverse (20a) de l'habillage de capot, et une hauteur (H1) de la première section de surface plate (35a) à la surface inverse (20a) de l'habillage de capot est plus grande qu'une hauteur (H2) de la deuxième section de surface plate (35c) à la surface inverse (20a) de l' habillage de capot.

2. Capot de véhicule selon la revendication 1, dans lequel la première section de surface plate (35a) a une longueur (L1) dans une direction avant-arrière du véhicule plus grande qu'une longueur (L2), dans la direction avant-arrière, de la deuxième section de surface plate (35c).

3. Capot de véhicule selon la revendication 1 ou 2, dans lequel les portions de poutre de renfort gauche et droite (33) s'étendent à la fois vers la deuxième section de surface plate (35c) et vers la section de surface inclinée (35b).

4. Capot de véhicule selon l'une quelconque des revendications 1 à 3, dans lequel le panneau de capot interne (30) présente une section d'extrémité proximale de panneau de capot (36) s'étendant du trou traversant (34) à la portion d'extrémité proximale d'ouverture/fermeture (30r), la section d'extrémité proximale de panneau de capot (36) ayant une troisième section de surface plate (36b), la troisième section de surface plate (36b) étant disposée sensiblement parallèle à la surface inverse (20a) de l'habillage de capot,
une hauteur (H3) de la troisième section de surface plate (36b) à la surface inverse (20a) de l'habillage de capot étant sensiblement égale à la hauteur (H2) de la deuxième section de surface plate (35c) à la surface inverse (20a) de l'habillage de capot,
un isolant (40) étant disposé sur et entre la deuxième section de surface plate (35c) et la troisième section de surface plate (36b).
